# EUROPÄISCHE PATENTANMELDUNG

(11) **EP 1 647 898 A1**
(43) Veröffentlichungstag der Anmeldung: **19.04.2006**
(21) Anmeldenummer: 04024296.8
(22) Anmeldetag: 12.10.2004
(51) Int. Cl.: G06F 17/30

(54) **Serverlose Replikation von Datenbanken**

(71) Anmelder: IMS Innovation Management Services GmbH, 91207 Lauf a.d. Pegnitz (DE)
(72) Erfinder: Germer, Armin, 13469 Berlin (DE); Hacker, André, 91217 Hersbruck (DE)
(74) Vertreter: Grünecker, Kinkeldey, Stockmair & Schwanhäusser Anwaltssozietät

(57) **Zusammenfassung**

Die Erfindung betrifft ein Verfahren zur serverlosen Replikation von Datenbanken. Das erfindungsgemäße Verfahren zeichnet sich dadurch aus, dass eine Kopie der Datenbank auf zumindest einem Peer des Peer-to-Peer-Computernetzwerks geändert wird, eine Synchronisationsaufforderung aufgrund der geänderten Kopie der Datenbank auf dem zumindest einen Peer des Peer-to-Peer-Computernetzwerks erstellt wird, die Synchronisationsaufforderung an sämtliche anderen Peers des Peer-to-Peer-Computernetzwerks übertragen wird, die Synchronisationsaufforderung von den sämtlichen anderen Peers empfangen und ausgeführt wird und Synchronisationsbestätigungen nach dem Ausführen der Synchronisationsaufforderung auf jedem der sämtlichen anderen Peers erstellt und an sämtliche Peers oder an sämtliche Peers mit Ausnahme des Peers, der die Synchronisationsbestätigung an die übrigen Peers überträgt, übertragen werden.

## Beschreibung

### Gebiet der Erfindung

Die vorliegende Erfindung betrifft ein Verfahren zur Replikation von Datenbanken in Peer-to-Peer-Strukturen.

### Stand der Technik

Gegenwärtige und künftige Computersysteme weisen zunehmend Architekturen auf, die dadurch ausgezeichnet sind, dass sowohl die Prozessor- als auch die Speicherkomponenten logisch und insbesondere auch physikalisch auf getrennte Computereinheiten verteilt sind.

Während in konventionellen Computersystemen ein hierarchisches Verhältnis zwischen einem zentralen Serversystem und einer zentralen Datenbank einerseits und lokalen Clients mit ihren eigenen, z.T. Nur-Lese-, Datenbanken andererseits vorherrscht, so sind Peer-to-Peer-Architekturen, in denen eine Anzahl gleichberechtigter Computereinheiten kollaborativ Informationen austauschen, von wachsender praktischer Bedeutung.

In solchen serverlosen Umgebungen stellt sich das Problem des effizienten und möglichst fehlertoleranten Abgleichs von Datenbanken, von denen einem jedem Peer eine Kopie zur Verfügung steht, auf die er zugreifen kann, zu deren Änderung er aber auch berechtigt ist. Wenn aber jeder Peer eines vernetzten Computersystems eine Änderungsberechtigung für eine oder mehrere Datenbanken besitzt, auf deren Kopie oder Kopien auch die anderen Peers zugreifen, und auf Grundlage der Daten dieser Datenbanken Informationen zwischen den Peers ausgetauscht werden, stellt sich dringend das Problem der Datenintegrität, da beispielsweise einer oder mehrere Benutzer zur gleichen Zeit eine oder mehrere der genannten Datenbanken modifizieren können.

Verschiedene Strategien zur Steuerung der Replikation und somit Synchronisation von Datenbanken in serverlosen Umgebungen sind aus dem Stand der Technik bekannt. So unterscheidet man synchrone von asynchronen Replikationsstrategien. Bei der synchronen Replikation wird normalerweise mit derselben Transaktion, mit der ein Benutzer eine Kopie der Datenbanken auf seinem Peer modifiziert, eine Änderungsprozedur für die Kopien der Datenbanken, auf die die übrigen Peers jeweils zugreifen, gestartet. Die Transaktion kann hierbei erst als beendet gelten, und es können erst daraufhin weitere Transaktionen zur Änderung derselben Datenbank oder anderer Datenbanken unternommen werden, wenn die zuerst ausgeführte Änderung für sämtliche Kopien des Peer-to-Peer-Systems nachvollzogen worden ist. Zudem muss bei einer solchen Replikationsweise sichergestellt werden, dass sämtliche Peers online sind, um unzumutbare Verzögerungen zu vermeiden.

Mithilfe asynchroner Replikationsverfahren werden zunächst Änderungen an einer der Kopien einer betreffenden Datenbank vorgenommen, dort gespeichert und sodann zu einer späteren Zeit an die anderen Peers weitergegeben und von diesen, wenn sie online sind, übernommen. Häufig wird bei den asynchronen Verfahren auf zentrale Datenbanken (US 2002/0188624) oder auf Knoten (US 5,261,094), die zunächst sämtliche, die Kopien einer Datenbank betreffenden ,Änderungen sammeln, zurückgegriffen. Hierdurch wird eine gewisse Abhängigkeit des Gesamtsystems von einer ausgezeichneten Einheit wieder eingeführt, die aber im Vergleich zu den klassischen Server-Client Architekturen gerade vermieden werden soll.

Lösungen, die zumindest Konflikte, resultierend aus unterschiedlichen Änderungen an den gleichen Kopien bestehender Datenbanken, die von unterschiedlichen Peers vorgenommen wurden, vermeiden, können gemäß dem "Eigentümerprinzip" implementiert werden. Hierbei wird jede Datenbank einem bestimmten Peer als Primärkopie zugeordnet, und diese darf nur von diesem geändert werden. Eine solche Lösung ist jedoch im Allgemeinen nicht praxisgerecht, da Änderungswünsche anderer Peers als des Eigentümers diesem erst mitgeteilt werden müssen, und von diesem hernach zu implementieren sind.

Es besteht mithin ein Bedarf, bekannte Organisationsstrukturen für die serverlose Datenbankreplikation dahingehend zu verbessern, dass auf eine kostengünstige, allgemein implementierbare und zuverlässige Weise der fehlertolerante Austausch aktualisierter Datenbanken von Peer zu Peer ermöglicht wird, wobei wünschenswerter Weise Informationen über mögliche Konflikte, wie kollidierende Änderungen verschiedener Benutzer, vorgesehen und vorteilhaft verwendet werden.

### Beschreibung

Die oben genannte Aufgabe wird durch das Verfahren der vorliegenden Erfindung gemäß Anspruch 1 gelöst. Das erfinderische Verfahren zur Replikation von Datenbanken in Peer-to-Peer-Computernetzwerken umfasst die Schritte: Ändern einer Kopie der Datenbank auf zumindest einem Peer des Peer-to-Peer-Computernetzwerks, Erstellen einer Synchronisationsaufforderung aufgrund der geänderten Kopie der Datenbank auf dem zumindest einen Peer des Peer-to-Peer-Computernetzwerks, Übertragen der Synchronisationsaufforderung an sämtliche anderen Peers des Peer-to-Peer-Computernetzwerks, Empfangen und Ausführen der Synchronisationsaufforderung auf den sämtlichen anderen Peers und Erstellen und Übertragen von Synchronisationsbestätigungen nach dem Ausführen der Synchronisationsaufforderung auf jedem der sämtlichen anderen Peers an sämtliche Peers oder an sämtliche Peers mit Ausnahme des Peers, der die Synchronisationsbestätigung an die übrigen Peers überträgt.

Die Peer-to-Peer-Architektur zeichnet sich dadurch aus, dass gleichberechtigte Computereinheiten ("Peers") über ein Netzwerk miteinander Daten austauschen und auf ihre jeweiligen Kopien von Datenbanken zugreifen, die sämtlichen Peers zur Verfügung stehen.

Die Synchronisationsaufforderung veranlasst sämtliche Peers des Computemetzwerks, die die Synchronisationsaufforderung empfangen, ihre entsprechenden Kopien von einer der betroffenen Datenbanken zu aktualisieren.

Die Übertragung der Synchronisationsaufforderung kann vorteilhafter Weise über einen standardmäßig und günstig erhältlichen Peer-to-Peer-Client, wie etwa vorzugsweise Virtual Office von Groove Networks, Inc., erfolgen. Alternativ können die Peer-to-Peer-Clients FolderShare von Byte Taxi, Inc. oder BelnSync von BelnSync Ltd. Anwendung finden, die ebenso sämtliche Bedingungen für die Anwendung des erfinderischen Verfahrens erfüllen.

Die von zumindest einem der Peers, dem Autor-Peer, ursprünglich vorgenommene Änderung oder die Änderungen einer Kopie einer Datenbank wird aufgrund der Synchronisationsaufforderung von den übrigen Peers für ihre jeweiligen Kopien der Datenbank nachvollzogen.

Durch die Übertragung von Synchronisationsbestätigungen sämtlicher der Synchronisationsaufforderung nachkommenden Peers ist gewährleistet, dass von jedem der Peers der Synchronisierungsstatus bekannt ist, d.h. jeder Benutzer kann prinzipiell von jeder Computereinheit des Netzwerks in Erfahrung bringen, ob und welche Änderungen an deren Kopien der Datenbanken ausgeführt worden sind.

Gemäß dem erfinderischen Verfahren ist kein Server oder eine anderweitig ausgezeichnete Computereinheit und ebenso keine "Masterkopie" einer Datenbank für die Datenreplikation erforderlich. Die Anzahl der in dem Netzwerk miteinander verbundenen Peers kann prinzipiell beliebig sein.

Der Synchronisierungsprozess, d.h. die Replikation sämtlicher Kopien der Datenbanken, kann permanent, im Hintergrund und automatisch erfolgen. Es stellen sich keine Probleme, wenn einzelne Peers zeitweise offline sind. Die Installation, Konfigurierung und Anwendung des erfindungsgemäßen Verfahrens ist vergleichsweise unproblematisch durchzuführen.

Es ist ein besonderer Vorteil der vorliegenden Erfindung, dass die eigentliche Datenübertragung zwischen den Peers über einen standardmäßig verfügbaren Peer-to-Peer-Client erfolgen kann. Das hier offenbarte Verfahren lässt sich also in Verbindung mit bereits bestehenden und gut ausgetesteten sowie kostengünstigen Datenübertragungslösungen implementieren, ohne eine bestehende Datenübertragungsfunktionalität zu beeinflussen.

Da die Synchronisationsaufforderung sowie die Synchronisationsbestätigungen in Form von Dateien gesendet werden, die Schnittstelle des erfinderischen Verfahrens zu dem bestehenden Peer-to-Peer-Client also standardmäßig durch Dateien dargestellt wird, ist das erfinderische Verfahren von den intrinsischen Weiterentwicklungen des verwendeten Peer-to-Peer-Clients unabhängig, wodurch die zukünftige Kompatibilität gewährleistet ist.

In einer bevorzugten Weiterbildung erfolgt gemäß dem erfindungsgemäßen Verfahren das Erstellen und Übertragen der Synchronisationsaufforderung und/oder der Synchronisationsbestätigungen automatisch. Zumal wenn sowohl die Aufforderung als auch die Bestätigung automatisch erfolgen, ist keine weitere Intervention der Benutzer erforderlich. So kann das gesamte Replikationsverfahren vollständig im Hintergrund ablaufen.

Vorteilhafterweise erfolgt gemäß dem erfinderischen Verfahren nach dem Schritt des Erstellens und Übertragens von Synchronisationsbestätigungen ein Löschen der Daten betreffend die Synchronisationsaufforderung und/oder die Synchronisationsbestätigungen auf dem zumindest einen Peer, von dem die Synchronisationsaufforderung übertragen wurde:

Gemäß dem erfinderischen Verfahren werden mögliche Konflikte auf der Ebene des Datenübertragungs-Programmes weitgehend vermieden, da die Synchronisationsaufforderung und die Synchronisationsbestätigungen, welche über das Dateiübertragungssystem übertragen werden, dem Eigentümer-Prinzip unterliegen. Sie werden grundsätzlich nach der Erstellung nicht mehr geändert und können gemäß dem Eigentümer-Prinzip nur durch den Autor-Peer gelöscht werden.

Für den Fall, dass ein Peer ausfällt und somit dieser seine eigene Synchronisationsaufforderung oder seine Synchronisationsbestätigungen nicht mehr löschen kann, können vorteilhafter Weise global gültige Regeln definiert werden, die einen der übrigen Peers identifizieren, der die Löschung durchführt, nachdem der ausgefallene Peer für eine definierte Zeit ausgefallen ist.

Durch das Löschen nicht mehr notwendiger Dateien wird Speicherplatz gespart und wird der Status des ursprünglichen Autor-Peers einfach identifiziert.

Es kann weiterhin wünschenswert sein, dass nach dem Schritt des Löschens der Daten betreffend die Synchronisationsaufforderung und/oder die Synchronisationsbestätigungen die Schritte des Erstellens von Löschungsinformationen auf dem zumindest einen Peer, von dem die Synchronisationsaufforderung übertragen wurde, und des Übertragens der Löschungsinformationen von dem zumindest einen Peer, durch den die Löschungsinformationen erstellt wurden, auf sämtliche andere Peers erfolgen.

Hierdurch werden alle Peers eindeutig von dem Abschluss der Replikation der Datenbank informiert.

In einer praktischen Weiterbildung umfasst der Schritt des Übertragens der Löschungsinformationen das Löschen der Daten über die Synchronisationsaufforderung.

In einer bevorzugten Weiterbildung der vorliegenden Erfindung umfasst die Synchronisationsaufforderung die Änderung der Kopie der Datenbank, die auf dem zumindest einen Peer ausgeführt wurde, von dem die Synchronisationsaufforderung übertragen wird, oder die geänderte Kopie der Datenbank, und es wird diese Änderung oder die geänderte Kopie auf die entsprechenden Kopien der sämtlichen anderen Peers übertragen:

Während prinzipiell die Synchronisationsaufforderung eine Aufforderung an die Peers enthalten kann, von dem Autor-Peer die entsprechende Änderung der Kopie einer Datenbank bzw. die entsprechende geänderte Datenbank zu laden, kann es praktikabler und schneller sein, die betreffende Änderung direkt zusammen mit der Synchronisationsaufforderung zu übermitteln.

Es ist vorteilhaft, der Änderung der Kopie einer Datenbank eine Änderungszeit zuzuordnen. Hierdurch wird jede Änderung eindeutig identifiziert und kann, namentlich nach der Zeit, geordnet werden. Auf dieser zeitlichen Ordnung beruht eine vorteilhafte Weiterbildung des erfinderischen Verfahrens nach welcher, wenn ein Datenkonflikt vorliegt, der Peer identifiziert wird, dessen Änderung der Kopie der Datenbank die jüngste Änderungszeit aufweist, und eine Behebung des Konflikts auf dem so identifizierten Peer erfolgt.

Ein Datenkonflikt liegt vor, wenn mehrere Synchronisations-Aufforderungen ergehen, die sich auf denselben Datensatz, oder Teil der Datenbank, beziehen, die von zumindest einem Peer noch nicht verarbeitet wurden.

In einem P2P-Netzwerk können komplexe Konfliktszenarien auftreten, da mehrere Peers Datensätze offline ändern und löschen können. Beispielsweise können beliebig viele Peers offline denselben Datensatz in Ihrer Kopie der Datenbank ändem oder löschen, wodurch ein Datenkonflikt mit beliebig vielen Synchronisations-Aufforderungen entstehen kann.

Auf diese Weise auftretende Datenkonflikte sind gemäß dem erfinderischen Verfahren nicht nur eindeutig erkennbar, sondern können durch eine effiziente ordnungsgemäße Konfliktauflösung durch ein paarweises Abarbeiten der Konflikte in der Reihenfolge der Änderungszeiten behandelt und gelöst werden.

Die Paare werden durch die jüngst geänderte und eine andere konfligierende Datenbankkopie gebildete. Die Konfliktlösung erfolgt manuell oder mit Computerunterstützung an dem Peer, an welchem die jüngste Änderung vorgenommen wurde.

Durch das paarweise Abarbeiten der Konflikte wird die Komplexität möglicher Konflikte auf eine geringe Anzahl möglicher Konflikte minimiert, die bei einem Datenkonflikt mit zwei Synchronisations-Aufforderungen entstehen können.

Genauer können Konflikte nach einer konfigurierbaren Entscheidungstabelle behandelt werden, die nach den Bedürfnissen des Benutzers von selbigem angepasst werden kann. Die Entscheidungstabelle kann so konfiguriert werden, dass einige Konflikttypen durch den Benutzer und andere automatisch nach bestimmten Regeln durch den Computer behandelt und gelöst werden.

Der Benutzer kann bei bestimmten Konflikten wählen, dass ein Konflikt, der eigentlich durch Interaktion mit dem Benutzer gelöst wird, immer nach einer vorgeschlagenen Regel vom Programm im Hintergrund behandelt und gelöst wird.

Löscht beispielsweise ein Benutzer einen Datensatz, den ein anderer Benutzer offline geändert hat, wird jenem Benutzer standardmäßig ein Konflikt angezeigt. Jener Benutzer kann nun wählen, dass die Datei automatisch wiederhergestellt wird, so dass dieser Konflikt "Löschen/Bearbeiten" dem Benutzer nie mehr gemeldet wird.

In einer vorteilhaften Weiterbildung des erfinderischen Verfahrens erfolgt das Ändern der Kopie der Datenbank auf dem zumindest einen Peer des Peer-to-Peer-Computernetzwerks aufgrund einer Änderungsinformation übertragen von einem Peer eines weiteren, von diesem, also demjenigen, zu dem der Peer gehört, auf dem das Ändern der Kopie der Datenbank erfolgt, physikalisch und/oder logisch unterschiedenen, Peer-to-Peer-Computemetzwerks.

Insbesondere kann somit ein Peer-to-Peer-Computernetzwerk in Subnetzwerke und ein übergeordnetes Netzwerk logisch aufgeteilt werden, wobei in jedem Subnetzwerk mindestens ein Peer für die Übergabe der Daten zwischen den benachbarten Netzwerk-Ebenen definiert wird (Übergabe-Peer), und die Gesamtheit der Übergabe-Peers der Subnetzwerke das übergeordnete Peer-to-Peer-Computernetzwerk definiert. Änderungsinformationen zwischen den Netzwerk-Ebenen werden durch die Übergabe-Peers ausgetauscht.

Eine solche Weiterbildung ist insbesondere für große Peer-to-Peer-Computernetzwerke vorteilhaft, da durch eine solche. Unterteilung das ansonsten mit der Anzahl der Peers exponentielle Anwachsen der Replikationstransaktionen vermieden werden kann.

Des weiteren stellt die vorliegende Erfindung ein Computerprogrammprodukt zur Verfügung, das einen oder mehrere computerlesbare Datenträger umfasst, die von Computern ausführbare Anweisungen enthalten, um die Verfahrensschritte des oben beschriebenen Verfahrens zur Replikation von Datenbanken in einem Peer-to-Peer-Computernetzwerk auszuführen.

Beispielhafte Ausführungsformen der vorliegenden Erfindung, die eine serverlose Replikation von Datenbanken aufweisen, werden nachfolgend anhand der Zeichnung näher erläutert.

Es illustrieren:
Figuren 1a bis 1 d das erfindungsgemäße Verfahren zur serverlosen Datenreplikation in Peer-to-Peer-Architekturen und
Figur 2 die paarweise Konfliktlösung gemäß dem erfinderischen Verfahren bei mehr als zwei Änderungen an Kopien einer Datenbank.

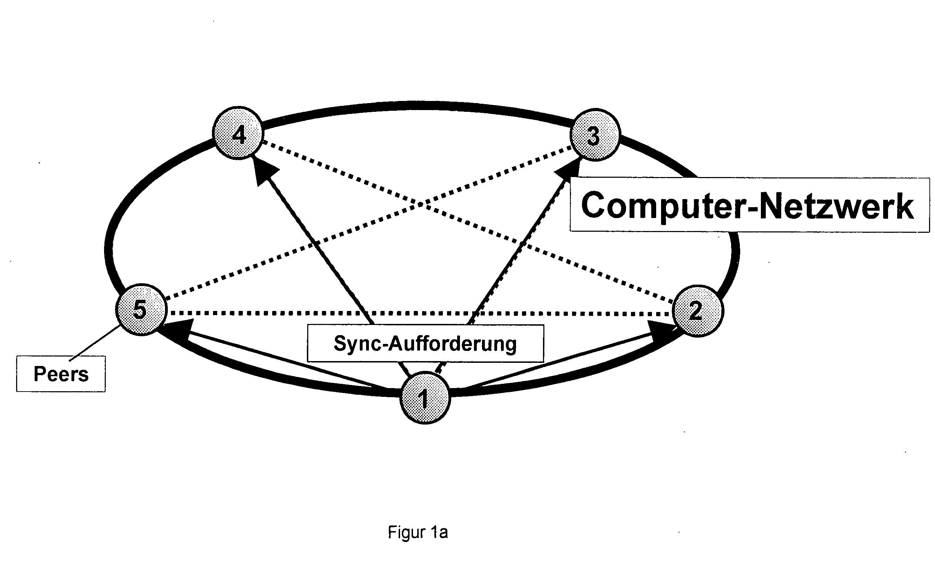

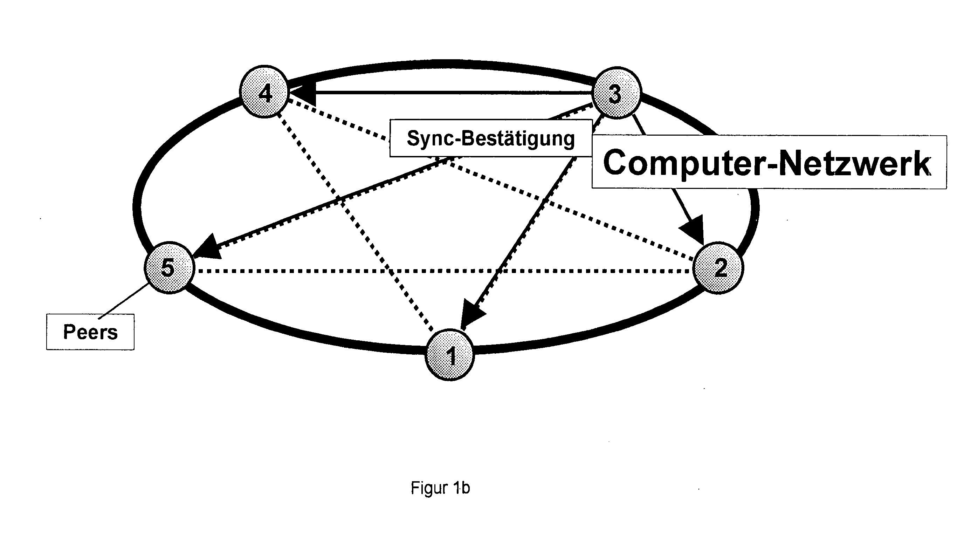

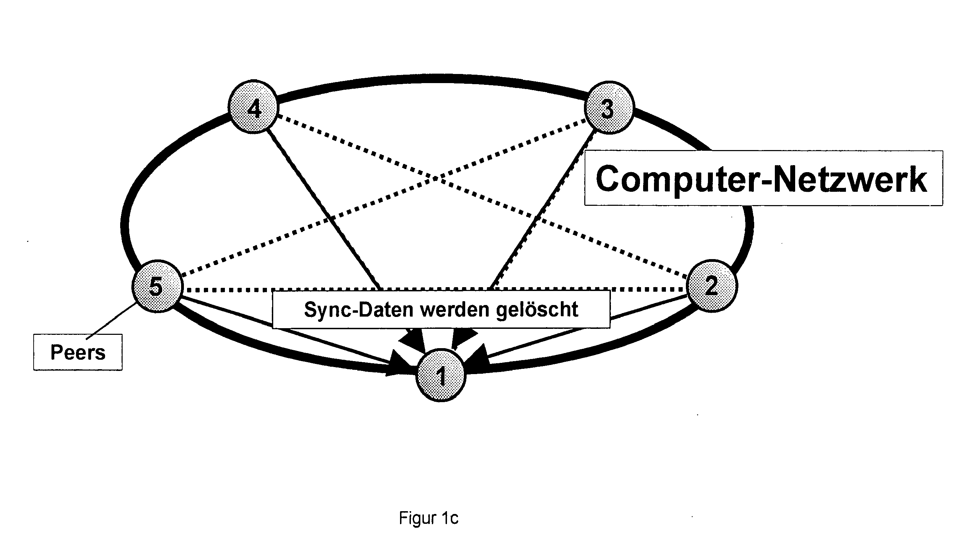

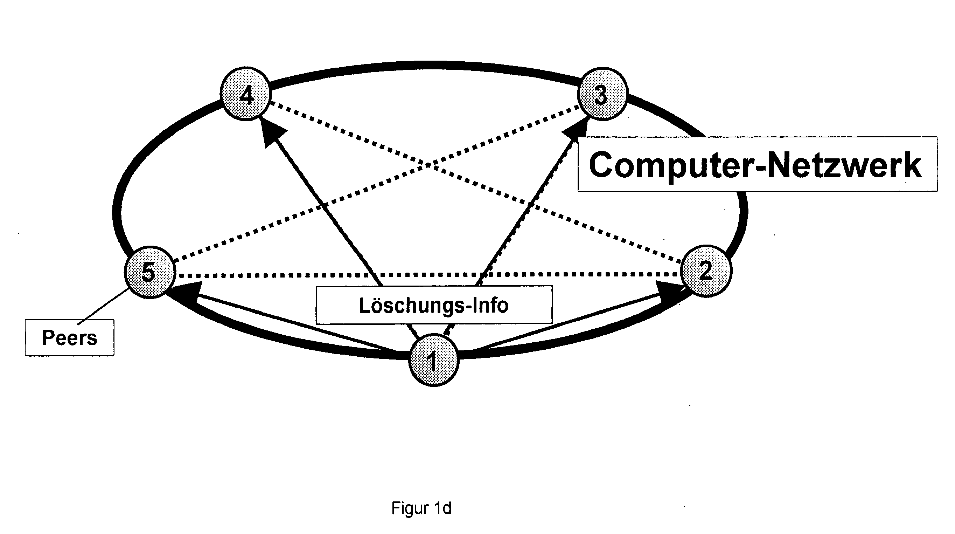

Figur 1 a zeigt beispielhaft fünf miteinander vemetzte Computereinheiten in einer Peer-to-Peer-Architektur. Der mit 1 nummerierte Peer nimmt an einer seiner Kopien von Datenbanken eine Änderung vor, und erstellt eine entsprechende Synchronisationsaufforderung (Sync-Aufforderung), d.h. eine Änderungsaufforderung, die vorteilhafterweise die Änderung selbst bereits enthält. Beispielsweise kann ein Teil der Kopie der Datenbank, der die Änderung enthält, oder die gesamte geänderte Kopie der Datenbank übertragen werden. Diese Synchronisationsaufforderung wird mithilfe eines Peer-to-Peer Clients an die übrigen vier Peers übertragen. Der Peer-to-Peer-Client kann eine bestehende Software-Lösung zur Datenübertragung zwischen vemetzten Computereinheiten, wie z. B. Virtual Office von Groove Networks, Inc., sein.

Figur 1 b zeigt den nächsten Schritt des Verfahrens. Die übrigen Peers, und hier beispielhaft insbesondere Peer Nummer 3, empfangen die Synchronisationsaufforderung und nehmen, falls kein Konflikt vorliegt und sie online sind, die entsprechende Änderung in ihren jeweiligen Kopien der entsprechenden Datenbank vor. Nach der vorgenommenen Änderung erstellt Peer Nummer 3, und nach vollzogener Änderung jeder andere Peer, der eine Synchronisationsaufforderung von Peer Nummer 1 erhalten hat, eine Synchronisationsbestätigung (Sync-Bestätigung). Diese Synchronisationsbestätigung wird, wünschenswerter Weise automatisch, mithilfe des Peer-to-Peer-Clients an alle übrigen Peers übertragen.

Wie in Figur 1 c gezeigt, werden auf dem Peer Nummer 1, welcher die Synchronisationsaufforderung an alle übrigen Peers gesendet hatte, nach dem Erhalt sämtlicher Synchronisationsbestätigungen die Daten, die sowohl die Synchronisationsaufforderung als auch die Synchronisationsbestätigungen betreffen, gelöscht.

Wie der Figur 1 d zu entnehmen ist, erstellt Peer Nummer 1, nachdem er die Synchronisationsdaten gelöscht hat, eine Löschungsinformation. Diese Löschungsinformation wird von dem Peer-to-Peer-Client, z. B. vorteilhafterweise automatisch, an die übrigen Peers übertragen, d.h. es wird die Löschung der Synchronisationsaufforderungsdaten auf allen übrigen Peers verursacht. Mit der Übertragung der Löschungsinformation kann das Verfahren zur serverlosen Datenreplikation gemäß der vorliegenden Erfindung beendet sein.

Mit dem mithilfe der Figuren 1 a bis 1 d beschriebenen Verfahren kann also sichergestellt werden, dass Änderungsinformationen bezüglich einer Kopie einer Datenbank allen Peers zur Verfügung stehen. Ebenso ist allen Peers der Verarbeitungsstatus sämtlicher Peers bekannt.

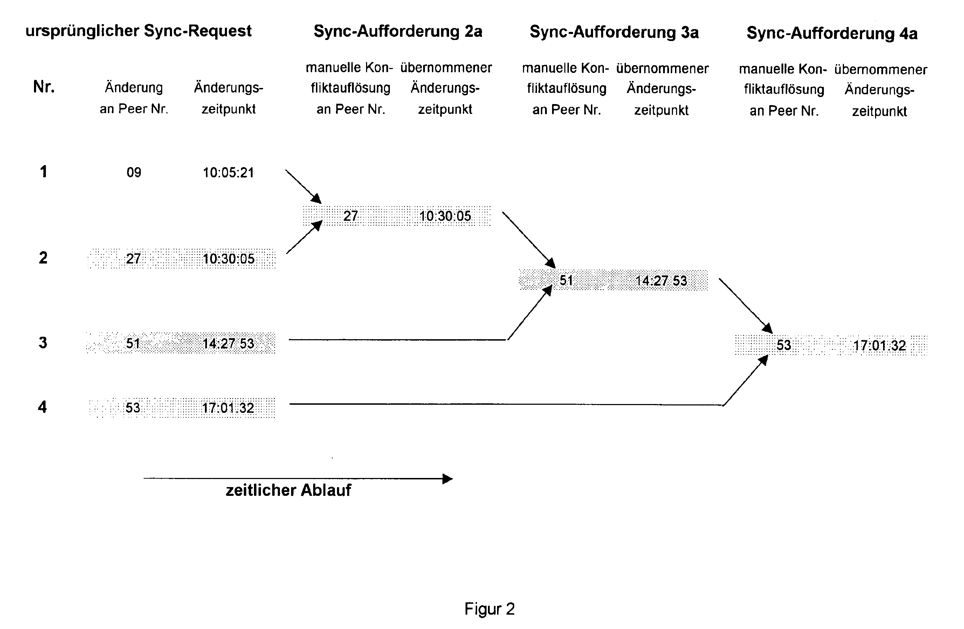

Figur 2 illustriert beispielhaft das Auflösen eines möglicherweise im Verlauf der Datenreplikation auftretenden Datenkonflikts. Gemäß dem gezeigten Beispiel erstellt Peer Nummer 9 zu dem Zeitpunkt 10:05:21 eine Synchronisationsaufforderung. Genauere Zeitbestimmungen sind selbstverständlich möglich.

Bevor sämtliche Peers des Netzwerks die Synchronisation abgeschlossen haben, sendet Peer Nummer 27 eine zweite Synchronisationsaufforderung zur Zeit 10:30:05 über den Peer-to-Peer-Client an alle Peers. Diese zweite Synchronisationsaufforderung verursacht einen Datenkonflikt. Beispielsweise könnte die Änderung, zu der Peer Nummer 27 auffordert, einen Dateneintrag betreffen, der durch die von Peer Nummer 9 vorgenommene Änderung nicht mehr existiert oder verschoben wurde oder so geändert wurde, dass die von Peer Nummer 27 vorgesehen Änderung nicht mehr sinnvoll durchgeführt werden kann.

Da von Peer Nummer 27 die jüngere Synchronisationsaufforderung übertragen wurde, wird er als Verursacher des Datenkonflikts identifiziert. Es kann nun eine manuelle Konfliktauflösung durch den Benutzer des Peers Nummer 27 erfolgen. Der Zeitpunkt der konfligierenden Änderung (10:30:05) wird als letzter Änderungszeitpunkt einstweilen gespeichert.

Zur Zeit 14:27:53 erfolgt eine weitere Synchronisationsaufforderung, die von dem Peer Nummer 51 an alle anderen Peers übertragen wird und ebenso einen, wenngleich typischerweise anders gearteten, Datenkonflikt auslöst. Entsprechend wird als jüngster Änderungszeitpunkt 14:27:53 übernommen und Peer 51 als Verursacher identifiziert. Eine entsprechende Behandlung erfährt die konfligierende Synchronisationsaufforderung, die um 17:01:32 von dem Peer Nummer 53 übertragen wird. Nach und nach kann somit eine Konfliktkette durch manuelle Konfliktauflösung von Verursacher zu Verursacher in eindeutiger Weise abgearbeitet werden.

Wie in Figur 2 gezeigt, ist bei auftretenden Konflikten zu jeder Zeit eindeutig erkennbar, wer der Verursacher eines Konflikts, d.h. der Peer, der die jüngste Änderung vorgenommen hat, ist. Insbesondere ist auch für den Fall mehrerer Änderungen an Kopien derselben Datenbank durch beliebige Peers ein paarweises Abarbeiten und Auflösen der Konflikte in der Reihenfolge ihrer Verursachung gewährleistet.

## Patentansprüche

1. Verfahren zur Replikation einer Datenbank in einem Peer-to-Peer-Computernetzwerk, umfassend
Ändern einer Kopie der Datenbank auf zumindest einem Peer des Peer-to-Peer-Computernetzwerks;
Erstellen einer Synchronisationsaufforderung aufgrund der geänderten Kopie der Datenbank auf dem zumindest einen Peer des Peer-to-Peer-Computemetzwerks;
Übertragen der Synchronisationsaufforderung an sämtliche anderen Peers des Peer-to-Peer-Computemetzwerks;
Empfangen und Ausführen der Synchronisationsaufforderung auf den sämtlichen anderen Peers;
Erstellen und Übertragen von Synchronisationsbestätigungen nach dem Ausführen der Synchronisationsaufforderung auf jedem der sämtlichen anderen Peers an sämtliche Peers oder an sämtliche Peers mit Ausnahme des Peers, der die Synchronisationsbestätigung an die übrigen Peers überträgt.

2. Verfahren nach Anspruch 1, worin das Erstellen und Übertragen der Synchronisationsaufforderung und/oder das Erstellen und Übertragen der Synchronisationsbestätigungen automatisch erfolgt.

3. Verfahren nach Anspruch 1 oder 2, in welchem nach dem Schritt des Erstellens und Übertragens von Synchronisationsbestätigungen ein Löschen der Daten betreffend die Synchronisationsaufforderung und/oder die Synchronisationsbestätigungen auf dem zumindest einen Peer, von dem die Synchronisationsaufforderung übertragen wurde, erfolgt.

4. Verfahren nach Anspruch 3, in welchem nach dem Schritt des Löschens der Daten betreffend die Synchronisationsaufforderung und/oder die Synchronisationsbestätigungen die Schritte erfolgen:
Erstellen von Löschungsinformationen auf dem zumindest einen Peer, von dem die Synchronisationsaufforderung übertragen wurde; und
Übertragen der Löschungsinformationen von dem zumindest einen Peer, durch den die Löschungsinformationen erstellt wurden, auf sämtliche andere Peers.

5. Verfahren nach Anspruch 4, worin das Übertragen der Löschungsinformationen das Löschen der Daten über die Synchronisationsaufforderung umfasst.

6. Verfahren nach einem der vorhergehenden Ansprüche, worin die Synchronisationsaufforderung die Änderung der Kopie der Datenbank, die auf dem zumindest einen Peer ausgeführt wurde, von dem die Synchronisationsaufforderung übertragen wird, umfasst, oder die geänderte Kopie der Datenbank umfasst, und diese Änderung oder die geänderte Kopie auf die entsprechenden Kopien der sämtlichen anderen Peers übertragen wird.

7. Verfahren nach einem der vorhergehenden Ansprüche, worin der Änderung der Kopie der Datenbank eine Änderungszeit zugeordnet wird.

8. Verfahren nach Anspruch 7, worin, wenn ein Datenkonflikt vorliegt, der Peer identifiziert wird, dessen Änderung der Kopie der Datenbank die jüngste Änderungszeit aufweist, und eine Behebung des Datenkonflikts auf dem so identifizierten Peer erfolgt.

9. Verfahren nach Anspruch 8, worin die Behebung des Datenkonflikts paarweise erfolgt.

10. Verfahren nach einem der vorhergehenden Ansprüche, worin
das Ändern der Kopie der Datenbank auf dem zumindest einen Peer des Peer-to-Peer-Computernetzwerks aufgrund einer Änderungsinformation, übertragen von einem Peer eines weiteren, von diesem physikalisch und/oder logisch unterschiedenen, Peer-to-Peer-Computernetzwerks erfolgt.

11. Verfahren nach einem der vorhergehenden Ansprüche, worin die Datenübertragung über einen standardmäßigen Peer-to-Peer-Client erfolgt.

12. Computerprogrammprodukt, das einen oder mehrere computerlesbare Datenträger umfasst, die von Computern ausführbare Anweisungen enthalten, um die Verfahrensschritte des Verfahrens nach einem der Ansprüche 1 - 1 auszuführen.
